# EUROPEAN PATENT SPECIFICATION

(11) **EP 2 515 665 B1**
(45) Date of publication and mention of the grant of the patent: **14.08.2013**
(21) Application number: 10781526.8
(22) Date of filing: 29.11.2010
(51) Int. Cl.: A23F 3/42, A23F 3/16

(54) **A PROCESS FOR PREPARING A TEA PRODUCT**
HERSTELLUNGSVERFAHREN FÜR EIN TEEPRODUKT
PROCEDE DE PREPARATION D'UN PRODUIT A BASE THE

(30) Priority: 22.12.2009 IN MU29532009; 17.02.2010 EP 10153768
(43) Date of publication of application: 31.10.2012
(73) Proprietor: Unilever NV, 3013 AL Rotterdam (NL); Unilever PLC, London Greater London EC4Y 0DY (GB)
(72) Inventor: SINGH, Gurmeet, Bangalore 560 066 (IN); RASTOGI, Anudeep, Bangalore 560 066 (IN); MAMTANI, Kuldeep, Balram, Bangalore 560 066 (IN); GUPTA, Anshul, Bangalore 560 066 (IN)
(74) Representative: Clarke, Christopher John
(86) International application number: PCT/EP2010/068386
(87) International publication number: WO 2011/076519

(56) References cited:
- WO-A1-2009/083420
- US-A- 4 880 656
- DATABASE WPI Week 200824 Thomson Scientific, London, GB; AN 2008-D23596 XP002623630, & JP 2007 321017 A (OGAWA KORYO KK) 13 December 2007 (2007-12-13)

## Description

### TECHNICAL FIELD

The invention relates to a process for preparation of a tea product.

### BACKGROUND OF THE INVENTION

There are many forms of tea products available in the market. These include black tea, green tea, oolong tea, ready-to-drink tea and hot instant or cold instant tea powder and a host of other tea blends tailored to specific consumer requirements.

Black tea is generally prepared by the process which includes the steps of withering, macerating, fermenting and firing/drying. The characteristic colour, flavour and aroma of black tea is produced during fermentation. The term fermentation is traditionally used in the tea processing to refer to enzymatic oxidation. The tea is dried at high temperature after fermentation to arrest the enzyme action and to bring down the moisture to a low level. Oolong tea is a type of tea which is taken through the same process steps as that used for preparing black tea except that the step of fermentation is only partially completed. Green tea is generally prepared by heat treating (e.g. by steaming or pan-frying) freshly plucked leaves to arrest enzyme action and then subjecting the leaves to one or more steps of rolling and drying. Ready- to- drink tea is another format where tea beverage which is ready to be consumed is packed in a can, or any other suitable container. Alternately, ready-to-drink tea is also dispensed from vending machines where tea may be prepared from leaves or water soluble tea powders in the machine wherefrom it is dispensed into cups for consumption. More recently, tea has also been made available in a hot-instant or cold-instant tea format. In this format, the hot water soluble fractions or the cold water soluble fractions of tea leaves (either green, black or oolong tea) are dried into a solid form. The consumer just needs to add water at desired temperature to these tea formats to prepare the beverage of his or her choice. Generally manufacturers blend the hot-instant or cold-instant tea with other formulating ingredients like milk powder, sugar, flavours like lemon, peach, cardamom etc to sell various types of these instant tea to meet the requirements of varied consumers.

There are many organoleptic properties of tea beverage which have to blend very smoothly with each other in order to meet the varied as well as specific consumer needs. These include aroma, taste, flavour, bitterness, astringency among a host of other properties. One of the most important properties which gives the tea drinker an initial attractive impact even before the beverage is prepared is the aroma of tea. Equally important is the perception of tea aroma by the tea drinker during the preparation of tea by boiling and during drinking. Thus, tea manufacturers have been trying to provide tea products with better and better aroma impact. One way this has been done is by adding synthetic or nature identical aroma compounds to the tea product by external blending. Another way has been by recovering the volatile aroma compounds evolved during the high temperature processing step viz. the drying step of the black tea manufacturing process.

An example of this is described in UK patent application GB1209055 (Tenco Brooke Bond, 1970) where fermented but unfired tea (dhool) is steamed, preferably under reduced pressure, to recover a steam-vapour mixture which is condensed to form a distillate containing most of the volatile flavour components, where distillate may be concentrated or the essential oils recovered therefrom. The steamed dhool is then fired and extracted to give a concentrate of soluble solids, for example with water, and preferably under an inert atmosphere. The steam distillate (or its concentrate or oil) is blended with the fired dhool extract (which may have been extracted together with the fired dhool), which extracts may have been concentrated, and the mixture may be freeze dried or spray dried to give an instant tea. The specific process exemplified in the above document is by contacting dhool with steam in steamer at pressure of 280 Torr and temperature of vapour issuing from steamer is about 70 °C. Such a process involves an additional steaming step after fermentation and increases the overall processing time and necessitates capital expenditure for investing in additional steamer equipped with vacuum. Secondly, the resulting aroma is relatively poor in fresh notes.

Another way the volatile aroma compounds in the tea have been recovered and utilised is described in GB1117102 (Nestle, 1968) where comminuted unfermented fresh tea is suspended in a liquid, and at least a part of the aromatics is stripped from the solution, for example under reduced pressure at about 60°C., and recovered, and soluble matter is then extracted from the tea to provide an extract. The suspension may be fermented prior to extraction, if desired, during the stripping, preferably at 20-60°C. The examples indicate a process where leaf is mixed with water to prepare a suspension having 4-5% total solids followed by stripping. In such a process a large quantity of water and/or solvent is condensed together with the aroma volatiles, which necessitates further processes of separation of the water/solvent. In addition, such a process requires additional equipment such as thin film evaporator and can not be used in the conventional processing. Furthermore, the fresh leaf which is subjected to such a process can not be used further to obtain further tea products such as black tea or oolong tea having properties of conventional black or oolong tea.

WO 2009/083420 (Uniilever) discloses a process for recovering aroma compounds from a tea material by contacting the tea material with water or water vapor.

In some of the processes there is a modification in the usual process of tea manufacture which tends to change the properties of the tea produced. In other cases where volatile aroma compounds are recovered from the dryer exhaust which is very lean in these volatile aroma compounds, one needs to resort to expensive recovery methods and use specialised equipment which tends to make the process economically unattractive.

It is an object of the present invention to overcome or ameliorate at least one of the disadvantages of the prior art or to provide a useful alternative.

It is another object of the present invention to obtain a tea product that has relatively high fresh notes.

It is another object of the present invention to provide for a process to prepare a tea product where the process comprises a step of recovery of volatile aroma compounds in good yield and quality from the tea leaf.

It is another object of the present invention to be able to recover aroma during the processing of tea leaf without compromising on the quality of the tea product that may be further obtained from the tea leaf.

It is another object of the present invention to provide for a process to recover volatile aroma compounds from a traditional tea manufacturing process where the recovered aroma compounds are produced in good yield and quality such that it can be added back to any tea product to enhance the aroma impact of that product.

### SUMMARY OF THE INVENTION

According to the first aspect of the present invention there is provided a process for preparing a tea product characterized in that the process comprises the steps of:
a. contacting tea leaf with a gas phase to obtain aroma-laden gas phase, said gas phase comprising less than 30 g water vapour per kg of the gas phase on dry basis, and;
b. recovering aroma from the aroma-laden gas phase by subjecting the aroma-laden gas phase to:
   i. a step of condensation to obtain an aroma condensate, optionally to a further step of concentrating the aroma condensate to obtain an aroma concentrate, or;
   ii. a step of contacting with an adsorbent, optionally to a further step of desorption
wherein and the weight ratio of water to dry mass of tea leaf is less than 5 during the step (a), and the step (b) is prior to a step of deactivation of enzymes in the tea leaf.

According to a second aspect of the present invention there is provided a black tea or oolong tea comprising the aroma condensate or the aroma concentrate or the desorbed aroma of the first aspect where the material separated from the adsorbent during the desorption is termed as desorbed aroma.. The aroma condensate or the aroma concentrate or the desorbed aroma is preferably from 0.01-10% by weight. more preferably in the range of 0.1 to 5% by weight of the black tea.

According to a third aspect of the present invention there is provided a ready-to-drink tea comprising the aroma condensate or the aroma concentrate or the desorbed aroma of the first aspect. The aroma condensate or the aroma concentrate or the desorbed aroma is preferably from 0.01-10% by weight, more preferably 0.01 to 5% by weight of the ready-to-drink tea.

### DETAILED DESCRIPTION OF THE INVENTION

"Tea" for the purposes of the present invention means material from *Camellia sinensis* var. *sinensis* or *Camellia sinensis* var. *assamica*. It also includes rooibos tea obtained from *Aspalathus linearis.* "Tea" is also intended to include the product of blending two or more of any of these materials.

The tea product produced by the process of this invention may be fermented tea (i.e. black tea), or semi-fermented tea (i.e. oolong tea).

By "ready-to-drink tea" is meant a beverage comprising tea solids. Ready-to-drink tea usually has a water content of at least 80%, optimally between 85 and 99.9% by weight. Ready-to-drink tea may be packaged in an air tight container such as a can or bottle. The tea solids content of ready-to-drink tea is typically in the range of 0.001 to 5% by weight, preferably 0.01 to 3% by weight and most preferably 0.1 to 1% by weight.

The term tea leaf as used herein includes leaves and stem of the tea plant. Preferably, the tea leaf comprises actively growing buds, e.g. in the form of the first two or three leaves together with the unopened bud (so-called "two-leaf-and-a-bud" or "three-leaf-and-a-bud" material). The fresh tea leaf may first be withered for about 12 to 36 hours. Biochemical and/or chemical changes taking place during withering may increase the yield of the volatile flavour compounds in tea.

Both comminuted as well as uncomminuted tea leaf may be used. However, the tea leaf is preferably a comminuted tea leaf. Tea leaf is preferably comminuted by maceration. Maceration involves wounding the leaves e.g. by rolling and/or crushing the leaves i.e. to break down the plant tissue structure. The maceration is preferably achieved by passing the tea leaves through a cutting machine. Thus for the purpose of the invention the tea leaves may be macerated by a maceration process using a CTC, rotorvane, ball mill or a grinder or a hammer mill or a Lawri tea processor or a Legg cutting machine or rolled using tea rollers as in orthodox tea processing. Combinations of these maceration processes may also be used. Fresh tea leaf which is withered and macerated is known as dhool.

### The step (a)

The step (a) involves contacting the tea leaf is with a gas phase. The gas phase preferably comprises oxygen. More preferably the gas phase comprises air.

Comminuted as well as uncomminuted tea leaf may be used. However, the tea leaf is preferably a comminuted tea leaf. Tea leaf is preferably comminuted by maceration. Maceration involves wounding the leaves e.g. by rolling and/or crushing the leaves i.e. to break down the plant tissue structure. The maceration is preferably achieved by passing the tea leaves through a cutting machine. Thus for the purpose of the invention the tea leaves may be macerated by a maceration process using a CTC, rotorvane, ball mill or a grinder or a hammer mill or a Lawri tea processor or a Legg cutting machine or rolled using tea rollers as in orthodox tea processing. Combinations of these maceration processes may also be used. Fresh tea leaf which is withered and macerated is known as dhool.

The gas phase is at a temperature preferably less than 150 °C, more preferably less than 120 °C. The gas phase is preferably at a temperature greater than 5 °C, more preferably greater than 20 °C. It is particularly preferred that the gas phase is at a temperature in the range of 20 °C to 120 °C.

The weight ratio of water to dry mass of tea leaf is less than 5, more preferably less than 4.5 and further preferably less than 4. If any non-aqueous liquid is present during the step (a), the ratio of non-aqueous liquid to dry mass of tea is less than 5, more preferably less than 4. It is particularly preferred that the tea leaf is not contacted with a non-aqueous liquid.

The gas phase comprises less than 30 g water vapour per kg of the gas phase on dry basis. The gas phase comprises preferably less than 25 g, more preferably less than 20 g and most preferably 15 g water vapour or steam per kg of the gas phase on dry basis. The amount of water (g) per kg of the gas phase refers to the water vapour content of the gas phase prior to contacting with the tea leaf. The amount of water vapour (g) per kg of the gas phase may be easily determined by a skilled person from measurement of relative humidity and temperature.

The contacting of the tea leaf with the gas phase may be carried out in many ways. The tea leaf may be laid in thin layers onto the floor (typically less than 2 inches thick) or in deep beds (2 to 10 inches) with gas phase passed upwards through the bed. Examples of such deep bed contactors include batch units such as troughs & tubs with perforated mesh support on which tea leaf is put and continuous units comprising of perforated belts on which tea leaf is layered. The gas phase is pumped upward into the bed through the perforations. The air ensures availability of oxygen for the reactions happening during fermentation.

Contacting of the tea leaf with the gas phase results into transfer of volatiles liberated to the gas phase resulting into an aroma-laden gas phase.

The gas phase is contacted with the tea leaf at a rate of preferably 0.01 to 50 kg of the gas phase per kg dry mass of the tea leaf per hour, more preferably 1 to 30 kg of the gas phase per kg dry mass of the tea leaf per hour, most preferably 2 to 20 kg of the gas phase per kg dry mass of the tea leaf per hour. It is particularly preferred that the gas phase is contacted with the tea leaf at a rate of 2 to 15 kg of the gas phase per kg dry mass of the tea leaf per hour.

### The step (b)

The step (b) involves recovering aroma from the aroma-laden gas phase. It is envisaged that the steps (a) and (b) may be sequential or simultaneous, preferably sequential. It is essential that the step (b) is carried out prior to a step of deactivation of enzymes. It is particularly preferred that the step (a) is also carried out prior to the step of deactivation of enzymes.

The aroma-laden gas phase is preferably subjected to a step of condensation to recover the aroma condensate. Preferably, the aroma-laden gas phase is subjected to a step of condensation to recover the aroma condensate. For example, the aroma-laden gas phase may be directed to a condenser and the aroma compounds along with the water are condensed using a condenser supplied with a coolant at a temperature of -5° C to 30° C., more preferably in the range of -5 ° C to 20 ° C and most preferably in the range of -5 °C to 10° C. Alternatively, the aroma-laden gas phase is compressed to obtain the aroma condensate.

The aroma condensate comprises total organic carbon preferably in the range of 1 to 1000 mg/L, more preferably in the range of 10 to 500 mg/L and most preferably in the range of 10 to 300 mg/L.

The aroma condensate is preferably 1 to 2000 g, more preferably 10 to 1000 g, most preferably 50 to 500 g per kg of the dry mass of tea leaf.

It is possible to use methods of recovery of aroma other than condensation. The aroma-laden vapours may be subjected to a step of contacting with an adsorbent. The adsorbent is preferably selected from the group consisting of activated charcoal, resins (e.g. polystyrene-divinyl benzene beads), zeolites, and tea (e.g. black tea). The adsorbent which has been contacted with the aroma laden-vapours is preferably subjected to a further step of desorption. The desorption is preferably carried out by thermal treatment, or by contacting the adsorbent with organic solvents or super critical CO₂. The material separated from the adsorbent during the steps of desorption is termed as desorbed aroma.

The aroma condensate is preferably further concentrated to obtain an aroma concentrate. Any methods of concentration known in the art may be used: For example, the aroma condensate may be concentrated by reverse osmosis, distillation, cryo-concentration, freeze drying, and/or staged/partial condensation to prepare a tea aroma concentrate. It is particularly preferred to use the process of distillation for the concentration.

Alternatively the condensate could be concentrated in other ways; e.g. the condensate could be adsorbed on to one or more adsorbents selected from activated charcoal, resins (e.g. polystyrene-divinyl benzene beads), zeolites, or tea (e.g. black tea). The adsorbent may be packed in a column or fluidised bed and later desorbed to release the aroma components using thermal treatment, organic solvents or super critical CO₂.

The aroma concentrate comprises preferably at least 25 mg/L, more preferably at least 1000 mg/L, more preferably still at least 5000 mg/L total organic carbon. The total organic carbon in the aroma concentrate is preferably the range of 1000 to 500000 mg/L.

The process preferably comprises a step of deactivation of enzymes after the step (b).

The process preferably comprises a step of drying the tea leaf to moisture content of less than 10% by weight wt after the step (b) to obtain a tea product.

The step of drying may follow the step of deactivation or these two steps may be simultaneous. Preferablly, the deactivation of enzymes is a thermal deactivation carried out by contacting the leaf with steam or air at temperature greater than 70 °C. The drying step is preferably such that the moisture content of the tea is brought down to a range of 1 and 10% and optimally to a moisture content of about 5% by weight. Drying conventionally involves exposing the tea to a blast of hot, dry air in a high-convection dryer. It is well known that aroma is generated during this drying/firing process step which may also be recovered. However, recovery from such high-convection dryers, results in a dilute aroma, requiring excessive concentration. Thus a low-convection dryer as described in EP1926386 (Unilever, published in 2008) may be used to recover aroma, in addition to the aroma recovered by the process of the present invention.

The invention will now be described, by way of example only, with reference to the accompanying non-limiting examples.

### Examples

### Effect of the gas phase temperature and comminution

Withered tea leaf (from South Indian garden) was macerated/comminuted to form dhool. In one experiment uncomminuted tea was used. 500 g of dhool (or uncomminuted tea leaf) was packed in a bed of 10.16 cm (4 inches) depth. The dhool had a moisture content of 75 wt %, on wet basis i.e. the ratio of water to dry mass of tea leaf was equal to 3. Air at various temperatures (as shown in the table below) was passed through the bed for 120 minutes at a flow rate of about 30 L/min. The water vapour content in the air was 12 g/ kg of dry air. The aroma-laden gas phase exiting the bed was fed to a condenser. The condenser was provided with the cooling water utility at 2 °C. The aroma condensate was collected from the condenser at the end of 120 minutes. The fermented dhool (100 g) was dried in a fluidized bed dryer with air at a temperature of 120 °C for 20 minutes to obtain a black tea comprising 5% by weight moisture. This step of drying may also be termed as firing.

Measurement of Theaflavins (TFs): Tea product (1 g dry weight) was extracted with 50 mL of 70% methanol (V/V) at 80 °C for 10 minutes. The liquor was allowed to cool to 25 °C and centrifuged. The supernatant was diluted and then fed to HPLC (Shimadzu LC-10AT model) and the TF content was determined.

The concentration of the aqueous condensate in mgs of aroma per litre of condensate was measured by a Total Organic Carbon analyser (Shimadzu Model 5000A). The amount of aroma captured from the said process was then converted in mg of aroma recovered per kg dry weight of the dhool material.

The black tea obtained at the end of the process was evaluated as follows. End-cup was obtained by brewing 2 g black tea in 200 mL hot water at temperature of 100 °C for 3 minutes followed by straining. Olfactory evaluation of the end-cup was carried out by an expert.

**Table 1: Effect of the gas phase temperature and communition**

| Ex No | Temperature of gas phase in step (a) | Comminuted | Aroma condensate characteristics | | TF content (mg/ g dry weight of tea product) | End-cup black tea evaluation |
|---|---|---|---|---|---|---|
| | | | Aroma recovery (mg TOC/kg dry weight of dhool) | Concent ration (mg TOC /L condensate) | | |
| 1 | 25 | Yes | 19.9 | 52.6 | 1.2 | Green and floral |
| 2 | 25 | No | 4 | - | - | - |
| 3 | 80 | yes | 43.1 | 85.9 | 1.0 | Intense green and floral |
| A | 90 | yes | 570 | 34.1 | - | Cooked, fishy, woody, made tea colour is dull brown -not acceptable |

| | | | | | | |
|---|---|---|---|---|---|---|
| - indicates not measured. | | | | | | |

From the results, it is clear that the process of the present invention provides recovery of volatile aroma compounds in good yield and quality from the tea leaf. Furthermore, the process allows recovery of aroma during the processing of tea leaf without compromising on the quality of the tea product that is obtained from the tea leaf. It can be also seen that comminuted tea leaf provides better results as compared to uncomminuted tea leaf. It can be further observed that with the increase in the temperature of the gas phase in the step (a) from 25 °C to 80 °C, the aroma recovery is significantly improved (more than twice) whilst the theaflavins content drops marginally (by about 20%). Example no A in the Table 1 is a comparative example of the prior art, in which instead of gas phase having water vapour content of less than 30 g/kg of dry air of the present invention, steam (temperature ∼90°C). The resulting recovered aroma characteristics are not acceptable as shown in the table.

### Effect of the ratio of water to dry mass of the tea leaf

The experiments were carried out by varying the ratio of water to dry mass of the tea leaf under otherwise identical conditions of Example 1 as tabulated below (the relevant data of Example 1 is reproduced again for convenience). In all the experiments, drying conditions and drying time were identical.

**Table 2: Effect of the ratio of water to dry mass of the tea leaf**

| Ex No | Ratio of water to dry mass of tea leaf | Black tea obtained at the end of drying |
|---|---|---|
| 1 | 3 | Good. Dried tea leaf. |
| 4 | 4 | Wet tea leaf. Would require additional drying time/ energy |
| B | 6 | Soggy tea leaf. Would require even higher drying time/ energy |

From the above results, it can be seen that the increase in the ratio of the water to dry mass of tea leaf adversely impacts the quality of the processed material and its subsequent drying time and energy requirements.

### Effect of process sequence

The experiment was repeated with altered process sequence. The process sequence was altered by carrying the said process (step a) post/after drying/firing/deactivation and pre/before firing/drying/deactivation operation. Rest of the experimental conditions remain same as given in example 1. The temperature of the gas phase contacted with the bed was 25 deg C.

**Table 3: Effect of process sequence**

| Ex No | Process sequence | Aroma Recovery (mg TOC/ kg dry weight of dhool) |
|---|---|---|
| 1 | Step (a) - Step (b)-Firing | 19.9 |
| 5 | Firing - Step(a) - Step (b) | 0 |

From the results, it is clear that the deactivation (firing) step must be preceded by the process defined in step (b) in order to recover aroma.

### Effect of the gas phase contact rate

The process of Example 1 was repeated by varying the rate of contacting of the gas phase with the tea leaf, keeping all the other conditions identical. The results are tabulated below.

**Table 4: Effect of the gas phase contact rate**

| Ex No | The gas phase contact rate (kg air / kg dry mass of tea leaf/ hour) | Aroma Recovery (mg TOC/ kg dry weight of dhool) |
|---|---|---|
| 1 | 13.8 | 19.9 |
| 5 | 6 | 29.5 |
| 6 | 0.3 | 1.8 |

From the results, it is clear that the best results in terms of aroma recovery are obtained at a selective range of the gas phase contact rate.

## Claims

1. A process for preparing a tea product **characterized in that** the process comprises the steps of:
a. contacting tea leaf with a gas phase to obtain aroma-laden gas phase, said gas phase comprising less than 30 g water vapour per kg of the gas phase on dry basis, and;
b. recovering aroma from the aroma-laden gas phase by subjecting the aroma-laden gas phase to:
i. a step of condensation to obtain an aroma condensate, optionally to a further step of concentrating the aroma condensate to obtain an aroma concentrate, or;
ii. a step of contacting with an adsorbent, optionally to a further
step of desorption;
wherein and the weight ratio of water to dry mass of tea leaf is less than 5 during the step (a), and the step (b) is prior to a step of deactivation of enzymes in the tea leaf.

2. A process as claimed in claim 1 wherein the gas phase is at a temperature less than 150 °C.

3. A process as claimed in claim 1 or 2 wherein said tea leaf is comminuted tea leaf.

4. A process as claimed in any one of the preceding claims wherein the gas phase is contacted with the tea leaf at a rate of 0.01 to 50 kg of the gas phase per kg dry mass of the tea leaf per hour.

5. A process as claimed in any one of the preceding claims wherein said gas phase comprises oxygen.

6. A process as claimed in any one of the preceding claims comprises a step of deactivation of enzymes after the step (b).

7. A process as claimed in any one of the preceding claims comprising a step of drying the tea leaf to moisture content of less than 10% by weight after the step (b) to obtain a tea product.

8. A process as claimed in any one of the preceding claims wherein said aroma-laden gas phase is subjected to a step of condensation to recover the aroma condensate.

9. A process as claimed in any one of the preceding claims wherein the aroma condensate comprises total organic carbon in the range of 1 to 1000 mg/L.

10. A process as claimed in any one of the preceding claims wherein the aroma condensate is 1 to 2000 g per kg of the dry mass of tea leaf.

11. A process as claimed in any one of the preceding claims wherein the aroma condensate is subjected to a step of concentrating the aroma condensate to obtain an aroma concentrate.

12. A black tea or oolong tea comprising the aroma condensate or the aroma concentrate or the desorbed aroma according to claim 1 where the material separated from the adsorbent during the desorption is termed as desorbed aroma.

13. A black tea or oolong tea as claimed in claim 12 wherein the aroma condensate or the aroma concentrate or the desorbed aroma is from 0.01-10% by weight.

14. A ready-to-drink tea comprising the aroma condensate or the aroma concentrate or the desorbed aroma according to claim 1.

15. A ready-to-drink tea as claimed in claim 14 wherein the aroma condensate or the aroma concentrate or the desorbed aroma is from 0.01-10% by weight.

## Patentansprüche

1. Verfahren zur Herstellung eines Tee-Produktes, **dadurch gekennzeichnet, dass** das Verfahren die Schritte umfasst:
a. In-Kontakt-Bringen von Teeblättern mit einer Gasphase, um eine aromabeladene Gasphase zu erhalten, wobei die Gasphase weniger als 30 g Wasserdampf pro kg der Gasphase auf Trockenmassebasis umfasst, und
b. Gewinnen von Aroma aus der aromabeladenen Gasphase durch Unterwerfen der aromabeladenen Gasphase:
i. einem Kondensationsschritt, um ein Aromakondensat zu erhalten, gegebenenfalls einem weiteren Schritt des Konzentrierens des Aromakondensats unter Erhalt eines Aromakonzentrats oder
ii. einem Schritt des In-Kontakt-Bringens mit einem Adsorbens,
gegebenenfalls einem weiteren Schritt der Desorption;
wobei das Gewichtsverhältnis von Wasser zu Trockenmasse der Teeblätter weniger als 5 während Schritt (a) ist, und der Schritt (b) vor einem Schritt der Deaktivierung von Enzymen in den Teeblättern ist.

2. Verfahren, wie es in Anspruch 1 beansprucht ist, wobei die Gasphase bei einer Temperatur von niedriger als 150 °C ist.

3. Verfahren, wie es in Anspruch 1 oder 2 beansprucht ist, wobei die Teeblätter fein zerkleinerte Teeblätter sind.

4. Verfahren, wie es in einem der vorangehenden Ansprüche beansprucht ist, wobei die Gasphase mit den Teeblättern mit einer Rate von 0,01 bis 50 kg der Gasphase pro kg Trockenmasse der Teeblätter pro Stunde in Kontakt gebracht wird.

5. Verfahren, wie es in einem der vorangehenden Ansprüche beansprucht ist, wobei die Gasphase Sauerstoff umfasst.

6. Verfahren, wie es in einem der vorangehenden Ansprüche beansprucht ist, das einen Schritt der Deaktivierung von Enzymen nach dem Schritt (b) umfasst.

7. Verfahren, wie es in einem der vorangehenden Ansprüche beansprucht ist, das einen Schritt der Trocknung der Teeblätter auf einen Feuchtigkeitsgehalt von weniger als 10 Gew.-% nach dem Schritt (b) unter Erhalt eines Teeproduktes umfasst.

8. Verfahren, wie es in einem der vorangehenden Ansprüche beansprucht ist, wobei die aromabeladene Gasphase einem Kondensationsschritt unterzogen wird, um das Aromakondensat zu gewinnen.

9. Verfahren, wie es in einem der vorangehenden Ansprüche beansprucht ist, wobei das Aromakondensat organischen Gesamtkohlenstoff im Bereich von 1 bis 1000 mg/l umfasst.

10. Verfahren, wie es in einem der vorangehenden Ansprüche beansprucht ist, wobei das Aromakondensat 1 bis 2000 g pro kg der Trockenmasse der Teeblätter ist.

11. Verfahren, wie es in einem der vorangehenden Ansprüche beansprucht ist, wobei das Aromakondensat einem Schritt der Konzentrierung des Aromakondensats unterzogen wird, um ein Aromakonzentrat zu erhalten.

12. Schwarzer Tee oder Oolong-Tee, der das Aromakondensat oder das Aromakonzentrat oder das desorbierte Aroma gemäß Anspruch 1 umfasst, wobei das Material, das während der Desorption von dem Adsorbens abgetrennt wird, als desorbiertes Aroma bezeichnet wird.

13. Schwarzer Tee oder Oolong-Tee, wie er in Anspruch 12 beansprucht ist, wobei das Aromakondensat oder das Aromakonzentrat oder das desorbierte Aroma 0,01 bis 10 Gew.-% ist.

14. Trinkfertiger Tee, der das Aromakondensat oder das Aromakonzentrat oder das desorbierte Aroma gemäß Anspruch 1 umfasst.

15. Trinkfertiger Tee, wie er in Anspruch 14 beansprucht ist, wobei das Aromakondensat oder das Aromakonzentrat oder das desorbierte Aroma 0,01 bis 10 Gew.-% ist.

## Revendications

1. Procédé de préparation d'un produit à base de thé, **caractérisé en ce que** le procédé comprend les étapes suivantes :
a. la mise en contact de la feuille de thé avec une phase gazeuse pour obtenir une phase gazeuse chargée en arôme, ladite phase gazeuse comprenant moins de 30 g de vapeur d'eau par kg de la phase gazeuse sur une base sèche et ;
b. la récupération de l'arôme de la phase gazeuse chargée en arôme en soumettant la phase gazeuse chargée en arôme :
i. à une étape de condensation pour obtenir un condensat d'arôme, éventuellement à une autre étape de concentration du condensat d'arôme pour obtenir un concentré d'arôme ou ;
ii. à une étape de mise en contact avec un adsorbant, éventuellement à une autre étape de désorption ;
dans lequel le rapport en poids de l'eau sur la masse sèche de la feuille de thé est inférieur à 5 au cours de l'étape (a), et l'étape (b) est antérieure à une étape de désactivation d'enzymes dans la feuille de thé.

2. Procédé selon la revendication 1, dans lequel la phase gazeuse est à une température inférieure à 150°C.

3. Procédé selon la revendication 1 ou 2, dans lequel ladite feuille de thé est une feuille de thé broyée finement.

4. Procédé selon l'une quelconque des revendications précédentes, dans lequel la phase gazeuse est mise en contact avec la feuille de thé à une vitesse de 0,01 à 50 kg de la phase gazeuse par kg de masse sèche de la feuille de thé par heure.

5. Procédé selon l'une quelconque des revendications précédentes, dans lequel ladite phase gazeuse comprend de l'oxygène.

6. Procédé selon l'une quelconque des revendications précédentes, comprend une étape de désactivation d'enzymes après l'étape (b).

7. Procédé selon l'une quelconque des revendications précédentes, comprenant une étape de séchage de la feuille de thé jusqu'à une teneur en humidité inférieure à 10 % en poids après l'étape (b) pour obtenir un produit à base de thé.

8. Procédé selon l'une quelconque des revendications précédentes, dans lequel ladite phase gazeuse chargée en arôme est soumise à une étape de condensation pour récupérer le condensat d'arôme.

9. Procédé selon l'une quelconque des revendications précédentes, dans lequel le condensat d'arôme comprend du carbone organique total dans la plage de 1 à 1000 mg/L.

10. Procédé selon l'une quelconque des revendications précédentes, dans lequel le condensat d'arôme représente de 1 à 2000 g par kg de la masse sèche de la feuille de thé.

11. Procédé selon l'une quelconque des revendications précédentes, dans lequel le condensat d'arôme est soumis à une étape de concentration du condensat d'arôme pour obtenir un concentré d'arôme.

12. Thé noir ou thé oolong comprenant le condensat d'arôme ou le concentré d'arôme ou l'arôme désorbé selon la revendication 1, où la matière séparée de l'adsorbant au cours de la désorption est appelée arôme désorbé.

13. Thé noir ou thé oolong selon la revendication 12, dans lequel le condensat d'arôme ou le concentré d'arôme ou l'arôme désorbé représente de 0,01 à 10 % en poids.

14. Thé prêt à boire comprenant le condensat d'arôme ou le concentré d'arôme ou l'arôme désorbé selon la revendication 1.

15. Thé prêt à boire selon la revendication 14, dans lequel le condensat d'arôme ou le concentré d'arôme ou l'arôme désorbé représente de 0,01 à 10 % en poids.
